Europäisches Patentamt

European Patent Office

Office européen des brevets

(19)

(11) Publication number: **0 230 378**
**A2**

(12) # EUROPEAN PATENT APPLICATION

(21) Application number: **87300319.8**

(22) Date of filing: **15.01.87**

(51) Int. Cl.⁴: **C 09 J 3/00**

(30) Priority: **17.01.86 GB 8601109**

(43) Date of publication of application:
**29.07.87 Bulletin 87/31**

(84) Designated Contracting States:
**AT BE CH DE ES FR GB GR IT LI LU NL SE**

(71) Applicant: **Bass Public Limited Company**
**137 High Street**
**Burton-on-Trent DE14 1JZ (GB)**

(72) Inventor: **Cope, Roy**
**58A Rugeley Road Chase Terrace**
**Walsall West Midlands, WS7 8AA (GB)**

(74) Representative: **Wallbank, Roger Wickham et al**
**BARKER, BRETTELL & DUNCAN 138 Hagley Road**
**Edgbaston Birmingham, B16 9PW (GB)**

(54) **Adhesive substances.**

(57) An adhesive substance is made by the treatment of the walls of yeast cells in such a manner that they acquire adhesive properties. The yeast is preferably Saccharomyces cerevisiae. The yeast may be yeast that has been propagated in a brewing process. The treatment may comprise the subjection of yeast cells to alkaline conditions, which in turn maybe followed by acid conditions. Alternatively the treatment may comprise the subjection of yeast cells to treatment with an enzyme, such as a β-glucanase, that breaks down constituents of the cell walls. The resultant adhesive substance may be used alone as an adhesive or be mixed with other materials to form an adhesive. The adhesive preferably contains water. If applied to absorbent surfaces the water is absorbed and the adhesive bonds the surfaces together and is itself water-resistant.

# Description

## ADHESIVE SUBSTANCES

This invention relates to adhesive substances.

From a first aspect the present invention consists in a method of making an adhesive substance in which the walls of yeast cells are treated in such a manner that they acquire adhesive properties, cell walls treated in that manner constituting the adhesive substance.

The yeast employed is preferably yeast that has been propagated in the course of a brewing process. The yeast employed is preferably <u>Saccharomyces cerevisiae</u>.

The method is preferably such that at least some of the yeast cells remain unbroken.

The treatment may comprise subjecting the walls of the yeast cells to alkaline conditions. This is preferably effected at a temperature above ambient temperature. The walls of the yeast cells are preferably subjected to the action of sodium hydroxide, though other alkaline materials, preferably strong alkalis, may be used.

After treatment in alkaline conditions, the cell walls are preferably subjected to acid conditions. This is generally found to enhance the adhesive properties of the substance. Acetic acid may be used for this purpose, and the acid treatment is preferably carried out at a temperature above ambient temperature.

In an alternative method of treatment the cell walls are subjected to the action of at least one enzyme that breaks down constituents of the cell walls. The enzyme may be a $\beta$-glucanase, and is preferably one that has a $\beta$ (1→3), (1→6)-glucanase activity. Zymolyase (Kirin Brewery Co.) is a suitable enzyme for use.

From a second aspect the present invention consists in an adhesive substance made by a method of the kind outlined above.

From a third aspect the present invention consists in an adhesive consisting, at least in part, of an adhesive substance according to the second aspect of the invention.

From a fourth aspect the present invention consists in a method of bonding components together in which adjacent surfaces of the components are bonded together with the aid of an adhesive in accordance with the fourth aspect of the present invention. Preferably the surface of at least one of those components is absorbent and absorbs moisture from the adhesive.

From a fifth aspect the present invention consists in components bonded together by a method in accordance with the fourth aspect of the present invention.

The adhesive substance without further treatment may be used as an adhesive and may be in the form of a more or less viscous liquid. It may be applied at or near ambient temperature. The adhesive substance normally contains some water. If it is applied to an absorbent material such as paper or card, water from the adhesive substance is absorbed by the material whereupon the adhesive surfaces of the cells adhere to the material and to one another. As the cells are hydrophobic it is not easy to break the adhesive bond thus formed merely be adding water, so that the bond is usually water-resistant.

It is envisaged that the adhesive substance may be used as a substitute for the so-called 'hot melt' currently used for securing together the tabs and panels of such articles as cardboard boxes and cartons. It may also be used in the manufacture of corrugated cardboard. It may also be suitable for use as a wood-glue.

There now follow examples which illustrate the invention but are in no way limitative of the scope of the invention.

## Example I

An adhesive substance embodying the present invention was made in the following manner. 10g of brewer's yeast (<u>Saccharomyces cerevisiae</u>) were treated with 0.1 g sodium hydroxide. The yeast was waste yeast propagated in a brewing process and pressed in a conventional manner to yield a product containing 80% by weight of water. Such a product is a common byproduct of brewing. The sodium hydroxide was in solid, anhydrous form. The yeast and sodium hydroxide were heated together for 20 minutes at a temperature of 50°C. The resulting product was a viscous substance which was substantially neutral and with adhesive properties. The substance was found to be of use as an adhesive without further treatment and without the addition of any additional material. At ambient temperature some of the substance was spread in a thin layer onto a piece of absorbent cardboard, and another piece of similar cardboard was pressed onto it. Moisture was absorbed by the cardboard and as this occurred the pieces of cardboard became adhesively secured together. When rendered damp with water the adhesive bond did not break.

Similar substances with similar properties were made by methods differing from that described above only in the temperatures at which the yeast and alkali were heated together, the temperatures being in the range 50° to 100°C.

The adhesives made by the particular methods described in the last two preceding paragraphs are non-toxic and are therefore of particular use in circumstances in which this property is of value, such as in the manufacture of packaging that is to be used in the food industry. Many other adhesives within the scope of the present invention are also non-toxic and are likewise suitable for use in such circumstances.

## Example II

An adhesive substance made by the method described in Example I was treated with acetic acid. An aqueous solution of acetic acid at a strength of 1 mole per litre was admixed with the adhesive and the mixture was heated to 70°C and maintained at that temperature for 20 minutes before being allowed to cool to ambient temperature. The resultant product was found to be an adhesive substance with greater adhesive powers than the adhesive substance produced by the method described in Example I.

Example III

A sample of brewer's yeast of the kind described in Example I was treated with Zymolyase 60,000 (0.5 mg per mg wet weight of yeast) at a pH of 7 and a temperature of 37°C for a period of 24 hours. At the end of that period the enzyme was inactivated by heating the mixture of 100°C for a period of 30 minutes. The mixture was then allowed to cool to ambient temperature and was found to constitute an adhesive substance with properties similar to that produced by a method of the kind described in Example I.

**Claims**

1. A method of making an adhesive characterised in that the walls of yeast cells are treated in such a manner that they acquire adhesive properties, cell walls treated in that manner constituting the adhesive substance.

2. A method according to claim 1 characterised in that the yeast employed is yeast that has been propagated in the course of a brewing process.

3. A method according to claim 1 characterised in that the yeast employed is Saccharomyces cerevisiae.

4. A method according to any one of claims 1 to 3 characterised in that the treatment is such that at least some of the yeast cells remain unbroken.

5. A method according to claim 1 characterised in that the treatment comprises subjecting the walls of yeast cells to alkaline conditions.

6 A method according to claim 5 characterised in that the treatment includes subjecting the walls of yeast cells to acid conditions after they have been subjected to alkaline conditions.

7 A method according to any one of claims 1 to 4 characterised in that the treatment comprises subjecting the walls of yeast cells to the action of at least one an enzyme that breaks down constituents of the cell walls.

8. A method according to claim 7 in which the enzyme is a β-glucanase.

9. A method according to claim 8 in which the enzyme is Zymolyase.

10. An adhesive characterised in that it consists, at least in part of an adhesive substance made by a method in accordance with any one of the preceding claims.

11. A method of bonding components together, characterised in that adjacent surfaces of the components are bonded together with the aid of an adhesive according to claim 10.

12. A method according to claim 11 characterised in that the surface of at least one of said components is absorbent and absorbs moisture from the adhesive.

13. Components characterised in that they are bonded together by a method according to claims 11 and 12.